# EUROPEAN PATENT SPECIFICATION

(11) **EP 4 461 611 B1**
(45) Date of publication and mention of the grant of the patent: **04.11.2026**
(21) Application number: 23737134.9
(22) Date of filing: 06.01.2023
(51) Int. Cl.: B60W 10/06, B60W 10/08, B60W 30/18, B60W 10/26, B60W 20/10, B60L 15/20, B60L 50/16, B60L 50/61, B60L 58/12

(54) **VEHICLE CONTROL METHOD AND APPARATUS, AND VEHICLE**
FAHRZEUGSTEUERUNGSVERFAHREN UND -VORRICHTUNG UND FAHRZEUG
PROCÉDÉ ET APPAREIL DE COMMANDE DE VÉHICULE, ET VÉHICULE

(30) Priority: 07.01.2022 CN 202210017707
(43) Date of publication of application: 13.11.2024
(73) Proprietor: Great Wall Motor Company Limited, Baoding, Hebei 071000 (CN)
(72) Inventor: CUI, Wenxia, Baoding, Hebei 071000 (CN); CHANG, Cheng, Baoding, Hebei 071000 (CN)
(74) Representative: Klunker IP Patentanwälte PartG mbB
(86) International application number: PCT/CN2023/070907
(87) International publication number: WO 2023/131272

(56) References cited:
- EP-B1- 2 789 514
- CN-A- 104 670 207
- CN-A- 108 860 131
- CN-A- 113 879 309
- CN-A- 115 123 175
- US-A1- 2014 257 609
- US-A1- 2014 324 264
- US-A1- 2018 334 160
- US-A1- 2018 354 493

## Description

### TECHNICAL FIELD

The present invention relates to the technical field of vehicles and, more particularly, to a vehicle controlling method and apparatus, and a vehicle.

### BACKGROUND

In existing vehicles, the brake pedal and the gas pedal are used as the core component parts for identifying the driving intention of the driver. By stepping on the brake pedal with a single foot, the braking of the vehicle can be realized. By stepping on the gas pedal with a single foot, the starting is realized. Usually, while the brake pedal is being stepped on and after the brake pedal has been completely stepped on down, the torque outputting of the engine is stopped. Merely in the process that the brake pedal is being slowly released, a torque of the engine may be started to be slowly loaded. After the brake pedal is completely released, the vehicle starts to enter a creep mode, and starts to travel slowly. After the gas pedal is stepped on, the vehicle identifies the intention of acceleration of the driver, and starts to travel according to the intention of the driver.

In the starting of the vehicle, the brake pedal and the gas pedal may be operated at a same time to realize highly increasing the starting power before the starting of the vehicle, so that the vehicle can be quickly started with a greater power, i.e., realizing a function of launch control (ejection mode). Usually, the gas pedal is also referred to as the accelerator pedal. The conventional launch control is realized mostly by controlling the engine by using the gas pedal to output a large torque. However, the torque outputted by the engine has an upper limit, and, therefore, if the launch control of the vehicle is to be realized merely by relying on the torque outputted by the engine, the effect is poor.

US 2018/0334160 A1 discloses a vehicle containing a motor, an electric motor, a drivetrain and a control unit. The motor and the electric motor are each configured to generate power in the drivetrain. The control unit is programmed to, in response to a full depression of accelerator and brake pedals while the vehicle is stopped and the powertrain is in a drive mode, increase the motor power to a maximum power output capacity and increase a torque of the electric motor to a predetermined torque output that is less than a maximum torque capacity.

EP 2 789 514 B1 discloses a hybrid vehicle including, as a drive source, a hybrid system that has an engine and a motor. When the accelerator and the brake pedal are simultaneously depressed, the output transmitted to the drive wheels is decreased by controlling the motor torque, while maintaining the engine torque.

US 2014/257609 A1 discloses a hybrid vehicle including wheels, an engine, a motor-generator, a processor, and an actuation device. The processor controls an engine speed and an engine torque independently from a wheel speed and a wheel torque. While the hybrid vehicle is at a standstill, the actuation device is switched to an on state, and the engine speed and engine torque is raised to optimal values. When the actuation device is subsequently switched to an off state, the engine speed and the engine torque is applied to the plurality of wheels to launch the hybrid vehicle. The processor blends or further adjusts the torque applied to the plurality of wheels to maximize the acceleration while optimizing an amount of wheel slip.

### SUMMARY

It is an object of the present invention to provide a vehicle controlling method and vehicle controlling apparatus, a vehicle comprising the apparatus and a non-transitory computer-readable storage medium, wherein the vehicle can be driven to start by using the torque of the engine and the torque of the driving electric motor jointly, by which quick starting of the vehicle with a large torque can be realized, and the problem that the upper limit of the torque outputted by the engine causes a poor effect of launch control of the vehicle is solved.

The object is solved by the features of claim 1 regarding the method, by the features of claim 10 regarding the vehicle, and by the features of claim 11 regarding the non-transitory computer-readable storage medium. Further embodiments are defined in the respective dependent claims.

In the vehicle controlling method and apparatus, and the vehicle according to the present invention, before the starting of the vehicle, in response to the launching power build-up instruction, torque build-up is performed, the outputted torque of the driving electric motor is controlled to be the second outputted torque, and the outputted torque of the engine is controlled to be the first outputted torque, by using the driving electric motor and the engine simultaneously to perform torque build-up, the starting power is increased. Because before the starting, the crankshaft end of the engine cannot apply the torque to the vehicle wheels, or else that results in travelling of the vehicle or flameout of the engine, in the present invention, simultaneously when the outputted torque of the engine is adjusted to be the first outputted torque, the electric generator is further controlled to output the third outputted torque, so that the third outputted torque and the first outputted torque are balanced with each other, to achieve the goal that the outputted torque of the crankshaft end of the engine is zero. Subsequently, after the starting instruction is received, the third outputted torque of the electric generator is controlled to exit in the predetermined mode, so that based on the joint effect of the second outputted torque and the outputted torque of the crankshaft end of the engine, the vehicle can be driven to start with a large torque.

### BRIEF DESCRIPTION OF THE DRAWINGS

In order to more clearly illustrate the technical solutions of the present invention, the figures that are used to describe the invention or the related art will be briefly described below.
FIG. 1 is a schematic diagram of a vehicle power system;
FIG. 2 is a schematic flow chart of a vehicle controlling method;
FIG. 3 is a schematic structural diagram of a vehicle controlling apparatus; and
FIG. 4 is a schematic diagram of an electronic device.

### DETAILED DESCRIPTION

In the following description, in order for description rather than limitation, particular details such as particular system structures and techniques are provided, to facilitate to thoroughly comprehend the present invention which is defined in the claims. However, a detailed description on well-known systems, devices, circuits and methods is omitted, to prevent affecting the description by unnecessary details.

In order to make the objects, the technical solutions and the advantages of the present invention clearer, the present invention will be described below with reference to the drawings.

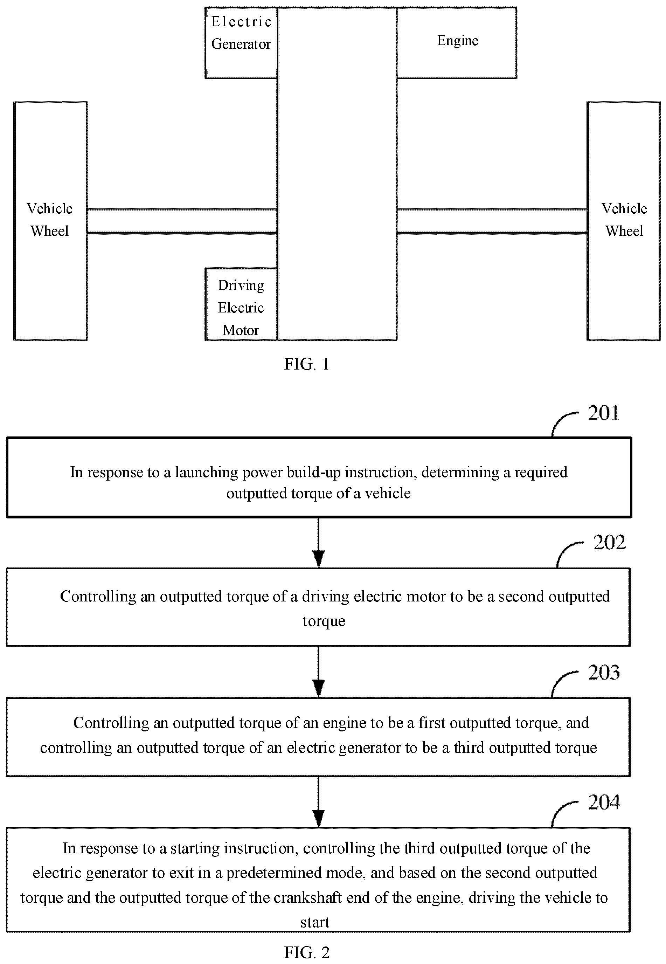

Firstly, the vehicle power system related to the present invention will be described briefly below. Referring to FIG. 1, the vehicle power system may include an engine, an electric generator and a driving electric motor. The driving electric motor is connected to the vehicle wheels, the engine is connected to the electric generator via a gear train, and the output-shaft end of the engine is connected to the vehicle wheels via a clutch. When the clutch is in the engaging state, the engine and the driving electric motor drive the vehicle wheels together. When the clutch is in the disengaging state, the driving electric motor drives the vehicle wheels.

In the starting of the vehicle, in order to enable the vehicle to start with a large power, the vehicle may be driven to start with a large torque by the joint effect of the outputted torque of the driving electric motor and the outputted torque of the engine. However, before the starting, the crankshaft end of the engine cannot apply the torque to the vehicle wheels, or else that results in flameout of the engine of the vehicle. At this moment, the outputted torque of the electric generator may be adjusted simultaneously when the outputted torque of the engine is adjusted, so that the outputted torque of the engine and the outputted torque of the electric generator are balanced with each other, to achieve the goal that the outputted torque of the crankshaft end of the engine is zero.

Specifically, a rotational speed of the engine may be controlled to be a preset rotational speed, and a state of the clutch is controlled to be a slipping state; subsequently, the outputted torque of the engine and the outputted torque of the electric generator are synchronously increased, so that the outputted torque of the engine and the outputted torque of the electric generator reach the effect of real-time dynamic balance; and when a starting instruction (an opening degree of the brake pedal is less than an opening-degree threshold) is detected, the outputted torque of the electric generator is controlled to exit in a gradient decreasing method, and subsequently the vehicle is driven to start by using the outputted torque of the driving electric motor and the outputted torque of the engine.

The vehicle controlling method according to the present invention will be described in detail below with reference to FIG. 1.

Referring to FIG. 2, FIG. 2 shows a flow chart of the implementation of a vehicle controlling method, which will be described in detail as follows:
Step 201: in response to a launching power build-up instruction, determining a required outputted torque of a vehicle.

As an example, the starting refers to the conversion from the stationary state to the movement state of the vehicle. The required outputted torque of the vehicle may be determined based on a vehicle working condition, the vehicle working condition includes the accelerator-pedal depth. The required outputted torque and the opening degree of the accelerator pedal are of a relationship of positive correlation. In other words, if the opening degree of the accelerator pedal is higher, the corresponding required outputted torque is higher, and if the opening degree of the accelerator pedal is lower, the corresponding required outputted torque is lower.

The required outputted torque includes a first outputted torque of the engine and a second outputted torque of the driving electric motor. The first outputted torque and the second outputted torque refer to, in the current state, i.e., the state that the launching power build-up instruction has been received, the outputted torque that the vehicle controller allocates for the engine and the outputted torque that the vehicle controller allocates for the driving electric motor, respectively. The first outputted torque may be less than or equal to the maximum torque that the engine is capable of supplying, the second outputted torque may be less than or equal to the maximum torque that the driving electric motor is capable of supplying, and the sum of the first outputted torque and the second outputted torque is the required outputted torque.

As an example, the step of determining the required outputted torque of the vehicle based on the vehicle working condition may include: determining the required outputted torque corresponding to an accelerator-pedal depth by using a predetermined data table. The predetermined data table may contain the corresponding relationship between the accelerator-pedal depth and the required outputted torque, and the predetermined data table may be obtained by pre-calibration. For example, the predetermined data table may be obtained by detecting, recording and verifying a rule of the variations of the accelerator-pedal depth and the required outputted torque by simulation experimentation, to accordingly obtain the corresponding relationship between the accelerator-pedal depth and the required outputted torque. Alternatively, the predetermined data table may also be obtained by calculating and designing the corresponding relationship between the accelerator-pedal depth and the required outputted torque in advance. The pre-calibration may be performed in various modes, which a person skilled in the art can know and are not described in detail.

After the required outputted torque has been obtained, the required outputted torque and the total available torque that the vehicle is capable of supplying may be compared. If the required outputted torque is less than or equal to the total available torque, then the power build-up for the starting of the vehicle may be performed according to the required outputted torque. If the required outputted torque is greater than the total available torque, it indicates that the torque required by the vehicle is excessively large and cannot be supplied by the vehicle, and therefore the numerical value of the required outputted torque may be reduced to the numerical value corresponding the total available torque or to be lower than the numerical value corresponding the total available torque, to perform power build-up for the starting of the vehicle.

In some embodiments, the total available torque may refer to the torque that the power system of the vehicle is currently capable of supplying. In other words, the total available torque may be determined based on the first available torque of the engine and the second available torque of the driving electric motor.

Specifically, the first available torque is the torque that the engine is currently capable of supplying, the second available torque is the torque that the driving electric motor is currently capable of supplying, and the total available torque is the sum of the first available torque and the second available torque. Moreover, the second available torque may be determined based on the discharging power and the rotational speed of the driving electric motor, and the first available torque may be a numerical value fed back by the engine. The second outputted torque may be less than or equal to the second available torque, and the first outputted torque may be less than or equal to the first available torque.

For example, the total available torque may be the sum of the first available torque Tq*_{engine}* and the second available torque Tq*ₘₒₜₒᵣ,* and the second available torque may be obtained by calculation according to the formula Tq*ₘₒₜₒᵣ*=a • P/n, a is a predetermined coefficient, P is a discharging power of the driving electric motor, and n is the rotational speed of the driving electric motor, a may be 9550.

In addition, after the second available torque Tq*ₘₒₜₒᵣ* has been obtained by calculation according to the formula Tq*ₘₒₜₒᵣ*=a • P/n, the second available torque Tq*ₘₒₜₒᵣ* may be compared with the maximum torque of the driving electric motor, to prevent that the second available torque Tq*ₘₒₜₒᵣ* obtained by calculation is greater than the maximum torque that the driving electric motor is capable of supplying, which causes that the driving electric motor cannot supply the torque corresponding to the second available torque. The maximum torque of the driving electric motor may be the maximum torque that the driving electric motor is calibrated to be capable of outputting.

If the second available torque Tq*ₘₒₜₒᵣ* is less than or equal to the maximum torque of the driving electric motor, the total available torque is determined according to the sum of the second available torque Tq*ₘₒₜₒᵣ* and the first available torque Tq*_{engine}.* If the second available torque Tq*ₘₒₜₒᵣ* is greater than the maximum torque of the driving electric motor, the total available torque is determined according to the sum of the maximum torque of the driving electric motor and the first available torque Tq*_{engine}.*

Because the driving electric motor has a higher response, and can output the given torque more quickly than the engine, firstly the corresponding torque may be allocated to the driving electric motor according to the available torque of the driving electric motor, and subsequently the remaining torque is allocated to the engine.

For example, the required outputted torque T*_{req}* may be firstly allocated to the driving electric motor and outputted according to the second available torque Tq*ₘₒₜₒᵣ,* at this moment, the second outputted torque is equal to the second available torque Tq*ₘₒₜₒᵣ.* Subsequently, the remaining torque is allocated to the engine, i.e., the torque obtained by subtracting the second available torque Tq*ₘₒₜₒᵣ* from the required outputted torque T*_{reg}.*

As another example, the required outputted torque T*_{req}* may be firstly allocated to the driving electric motor and outputted according to a certain torque T'*qₘₒₜₒᵣ* less than the second available torque Tq*ₘₒₜₒᵣ.* Subsequently, the remaining torque is allocated to the engine, i.e., the torque obtained by subtracting the torque T'*qₘₒₜₒᵣ* from the required outputted torque T*_{req}.*

In a scene, the launching power build-up instruction may be triggered based on the brake pedal and the accelerator pedal. For example, if the opening degree of the brake pedal is greater than or equal to a first opening-degree threshold, and the opening degree of the accelerator pedal is greater than or equal to a second opening-degree threshold, then the vehicle controller generates the launching power build-up instruction.

As an example, the first opening-degree threshold may be the threshold corresponding to the maximum opening degree of the brake pedal, and the second opening-degree threshold may be the threshold corresponding to the maximum opening degree of the accelerator pedal. Alternatively, the first opening-degree threshold may be 80%, and the second opening-degree threshold may be 70%. It should be noted that the above description on the first opening-degree threshold and the second opening-degree threshold is merely exemplary, and is not a limitation, a person skilled in the art may set the first opening-degree threshold and the second opening-degree threshold of other numerical values according to demands.

In some embodiments, after in response to the launching power build-up instruction, it may be firstly detected whether the vehicle state satisfies a predetermined condition. The predetermined condition includes the information used to characterize that the driving electric motor is capable of supplying a sufficiently large torque for the starting of the vehicle, that the ESP system is not started up, that the safety belt is fastened tightly, and so on. Specifically, the vehicle state may include a battery SOC (State Of Charge), a battery-pack temperature, a battery-pack discharging power, a driving-electric-motor temperature, an ESP (Electronic Stability Program) state and a safety-belt state.

If the battery SOC is greater than an SOC threshold, the battery-pack temperature is in a first predetermined range, the battery-pack discharging power is greater than a power threshold, the driving-electric-motor temperature is in a second predetermined range, the ESP state is off and the safety-belt state is fastened-tightly, then the step of determining the required outputted torque of the vehicle based on the vehicle working condition is executed.

The battery SOC can reflect the remaining capacity of the battery. In the starting of the vehicle, the discharging of the battery pack of the driving electric motor is required to be used to supply the torque, and therefore it is required to detect in advance whether the battery SOC is greater than the SOC threshold. If the battery SOC is less than the SOC threshold, it may cause that the torque that the driving electric motor is capable of supplying decreases, the effect of starting is poor.

The battery-pack temperature can reflect the state of the battery. If the temperature of the battery pack is excessively high or excessively low (not in the first predetermined range), that may affect the parameter performance of the battery pack, so that the performance of the battery pack is reduced. Moreover, in the starting of the vehicle, the discharging of the battery pack of the driving electric motor is required to be used to supply the torque, in this way, that may cause that the torque that the driving electric motor is capable of supplying decreases, and the effect of starting is poor. The first predetermined range refers to a temperature range that does not affect the parameter performance of the battery pack.

The battery-pack discharging power can reflect the capacity of discharging of the battery pack. In the starting of the vehicle, the discharging of the battery pack of the driving electric motor is required to be used to supply the torque, and if the discharging power of the battery pack is less than the power threshold, that may cause that the torque that the driving electric motor is capable of supplying decreases, and the effect of starting is poor. The first predetermined range refers to a temperature range that does not affect the parameter performance of the battery pack.

The driving-electric-motor temperature can reflect the performance of the driving electric motor. If the temperature of the driving electric motor is excessively high or excessively low (not in the second predetermined range), that may affect the performance of the driving electric motor, and cause the outputted torque of the driving electric motor to decrease. Moreover, in the starting of the vehicle, the discharging of the battery pack of the driving electric motor is required to be used to supply the torque, in this way, that might cause that the torque that the driving electric motor is capable of supplying decreases, and the effect of starting is poor. The second predetermined range refers to a temperature range that does not affect the performance of the driving electric motor.

Regarding the ESP state, because in the starting of the vehicle, a large torque is used, slipping of the vehicle wheels might happen. If the ESP state is started-up, the ESP system may intervene to reduce the torque to maintain the stability of the vehicle body, which also causes that the power in the starting of the vehicle decreases, and the effect of starting is poor.

The safety-belt state can characterize whether the driver and the on-board passengers have already fastened tightly the safety belt. If the safety-belt state is that the safety belts have been fastened tightly, then launch control may be performed. If the safety belts have not been fastened tightly, then the users may be prompted to fasten tightly the safety belts and subsequently launch control is performed, or launch control is not performed (for example, the execution of the subsequent steps may be stopped).

Step 202: controlling an outputted torque of a driving electric motor to be a second outputted torque.

After the required outputted torque of the vehicle is determined, because the driving electric motor has a higher response, and can output the given torque more quickly than the engine, firstly the driving electric motor may be allocated the corresponding torque according to the maximum torque of the driving electric motor, and subsequently the remaining torque is allocated to the engine.

For example, the required outputted torque T*_{req}* may be firstly allocated to the driving electric motor and outputted according to the second available torque Tq*ₘₒₜₒᵣ.* Subsequently, the remaining torque is allocated to the engine, i.e., the torque obtained by subtracting the second available torque Tq*ₘₒₜₒᵣ* from the required outputted torque T*_{reg}.*

As another example, the required outputted torque T*_{req}* may be firstly allocated to the driving electric motor and outputted according to a certain torque T'*qₘₒₜₒᵣ* less than the second available torque Tq*ₘₒₜₒᵣ.* Subsequently, the remaining torque is allocated to the engine, i.e., the torque obtained by subtracting the torque T'*qₘₒₜₒᵣ* from the required outputted torque T*_{reg}.*

Step 203: controlling an outputted torque of an engine to be a first outputted torque, and controlling an outputted torque of an electric generator to be a third outputted torque.

The electric generator and the engine are connected by using a planetary gear, and the third outputted torque and the first outputted torque are balance with each other, so that the outputted torque at the crankshaft end of the engine is zero. Furthermore, the sum of the second outputted torque and the first outputted torque is the required outputted torque.

Because, before the starting, the crankshaft end of the engine cannot apply the torque to the vehicle wheels, or else that results in travelling of the vehicle or flameout of the engine, in the present invention, simultaneously when the outputted torque of the engine is adjusted to be the first outputted torque, the electric generator is further controlled to output the third outputted torque, so that the third outputted torque and the first outputted torque are balanced with each other, to achieve the object that the outputted torque of the crankshaft end of the engine is zero.

The implementation process of the step 203 may include:
controlling a rotational speed of the engine to be a preset rotational speed; sending a torque intervening instruction to the engine and the electric generator, and controlling a state of a clutch to be a slipping state; and in response to the torque intervening instruction, synchronously increasing the outputted torque of the engine and the outputted torque of the electric generator, so that the outputted torque of the engine reaches the first outputted torque, and the outputted torque of the electric generator reaches the third outputted torque.

Specifically, before the launch control, the vehicle is required to output the torque in the stationary state, thus the effect of launch control can be reached. The driving electric motor can directly respond to the torque, and the crankshaft end of the engine, when the vehicle is stationary, cannot close the clutch if the engine responds to the torque. At this moment, the HCU (Hybrid Control Unit) can control the rotational speed of the engine to be approximately 1350rpm, subsequently send the torque intervening instruction to control the outputted torque of the crankshaft end of the engine to be 0, and simultaneously control the clutch to be in the slipping state. At this moment, the direct driving mode is entered, the outputted torque of the engine is requested to be T*_{req}-*Tq*ₘₒₜₒᵣ,* and the outputted torque of the electric generator is requested to be 0- speed ratio*(*T_{req}-*Tq*_{"motor}*)*.* Subsequently, synchronous increasing of the outputted torque of the engine and the outputted torque of the electric generator is started, thus it is ensured that, when the clutch is engaged, the outputted torque of the crankshaft end of the engine is 0. The speed ratio is determined based on the gear train between the engine and the electric generator, which is well known by a person skilled in the art and is not described in detail.

Step 204: in response to a starting instruction, controlling the third outputted torque of the electric generator to exit in a predetermined mode, and based on the second outputted torque and the outputted torque of the crankshaft end of the engine, driving the vehicle to start.

The starting instruction may be triggered when the opening degree of the brake pedal is zero; in other words, when it is detected that the opening degree of the brake pedal is less than a third opening-degree threshold, the third outputted torque of the electric generator is controlled to exit in a gradient decreasing method.

During the process that the third outputted torque of the electric generator exits by gradient decreasing (that process has a short duration, which is usually merely approximately 2 seconds), the outputted torque of the crankshaft end of the engine gradually increases within a short duration, and the power system of the vehicle, via the second outputted torque outputted by the driving electric motor and the outputted torque of the crankshaft end of the engine, drives the vehicle to realize the launch control.

In addition, after the vehicle has started the movement, the required outputted torque of the vehicle may be determined based on the accelerator-pedal depth and the vehicle travelling speed jointly. For example, the corresponding required outputted torque may be determined by using a predetermined data table according to the accelerator-pedal depth and the vehicle travelling speed. The predetermined data table may contain the corresponding relationship among the accelerator-pedal depth, the vehicle travelling speed and the required outputted torque. Similarly, the predetermined data table may be obtained by pre-calibration, wherein the mode of the pre-calibration is similar to the mode of the above-described pre-calibration, and is not discussed further herein.

In the vehicle controlling method, before the starting of the vehicle, in response to the launching power build-up instruction, the torque build-up is performed, the outputted torque of the driving electric motor is controlled to be the second outputted torque, and the outputted torque of the engine is controlled to be the first outputted torque, the torque build-up is performed by using the driving electric motor and the engine to increase the starting power. Because, before the starting, the crankshaft end of the engine cannot apply the torque to the vehicle wheels, or else that results in travelling of the vehicle or flameout of the engine, in the present invention, on the basis that the outputted torque of the engine is adjusted to be the first outputted torque, the electric generator is controlled to output the third outputted torque, so that the third outputted torque and the first outputted torque are balanced with each other, to achieve the object that the outputted torque of the crankshaft end of the engine is zero. Subsequently, after the starting instruction is received, the third outputted torque of the electric generator is controlled to exit in the predetermined mode, so that based on the joint effect of the second outputted torque and the outputted torque of the crankshaft end of the engine, the vehicle can be driven to start with a large torque.

It should be understood that the sequence of the serial numbers of the steps in the above embodiments do not indicate the sequence of the execution thereof, and the sequence of the execution of the steps should be determined according to their functions and internal logic, and should not limit the implementation of the embodiments of the present application in any manner.

An apparatus that may implement the present invention will be described below, and the details not described in detail therein may be referred to the above-described corresponding method.

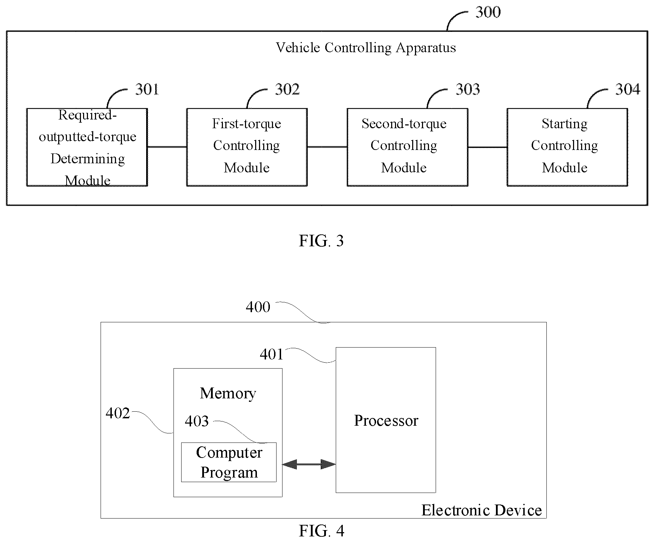

FIG. 3 shows a schematic structural diagram of a vehicle controlling apparatus according to the concept of the present invention. For the convenience of the description, merely the parts relevant are shown, and they will be described in detail as follows:
As shown in FIG. 3, the vehicle controlling apparatus 300 may include a required-outputted-torque determining module 301, a first-torque controlling module 302, a second-torque controlling module 303 and a starting controlling module 304.

The required-outputted-torque determining module 301 is configured for in response to a launching power build-up instruction, determining a required outputted torque of a vehicle. The first-torque controlling module 302 is configured for controlling an outputted torque of a driving electric motor to be a second outputted torque.

The second-torque controlling module 303 is configured for controlling an outputted torque of an engine to be a first outputted torque, and controlling an outputted torque of an electric generator to be a third outputted torque, wherein the third outputted torque and the first outputted torque are balanced with each other, so that an outputted torque at a crankshaft end of the engine is zero, and a sum of the second outputted torque and the first outputted torque is the required outputted torque.

The starting controlling module 304 is configured for in response to a starting instruction, controlling the third outputted torque of the electric generator to exit in a predetermined mode, and based on the second outputted torque and the outputted torque of the crankshaft end of the engine, driving the vehicle to start.

In a possible implementation, the vehicle controlling apparatus 300 may further include: a detecting module configured for detecting whether a vehicle state satisfies a predetermined condition, the vehicle state includes a battery SOC, a battery-pack temperature, a battery-pack discharging power, a driving-electric-motor temperature, an ESP state and a safety-belt state. If the battery SOC is greater than an SOC threshold, the battery-pack temperature is in a first predetermined range, the battery-pack discharging power is greater than a power threshold, the driving-electric-motor temperature is in a second predetermined range, the ESP state is off and the safety-belt state is fastened-tightly, the required-outputted-torque determining module 301 executes the operation of determining the required outputted torque of the vehicle based on the vehicle working condition.

In a possible implementation, the second-torque controlling module 303 may be specifically configured for: controlling a rotational speed of the engine to be a preset rotational speed; sending a torque intervening instruction to the engine and the electric generator, and controlling a state of a clutch to be a slipping state, the engine is connected to a vehicle wheel via the clutch; and in response to the torque intervening instruction, synchronously increasing the outputted torque of the engine and the outputted torque of the electric generator, so that the outputted torque of the engine reaches the first outputted torque, and the outputted torque of the electric generator reaches the third outputted torque.

In a possible implementation, the starting controlling module 304 may be specifically configured for, when it is detected that an opening degree of a brake pedal is less than a third opening-degree threshold, controlling the third outputted torque of the electric generator to exit in a gradient decreasing method.

In a possible implementation, the vehicle controlling apparatus 300 may further include: a total-available-torque calculating module configured for calculating a total available torque of the vehicle, the total available torque is determined based on a first available torque of the engine and a second available torque of the driving electric motor, and the second available torque is determined based on a discharging power and a rotational speed of the driving electric motor, wherein the second outputted torque is less than or equal to the second available torque, and the first outputted torque is less than or equal to the first available torque.

As an example, if the total available torque is greater than or equal to the required outputted torque, the first outputted torque is determined based on a difference between the required outputted torque and the second outputted torque; and if the total available torque is less than the required outputted torque, the first outputted torque is determined based on a difference between the total available torque and the second outputted torque.

In a possible implementation, the required-outputted-torque determining module 301 may be specifically configured for: determining the required outputted torque corresponding to an accelerator-pedal depth by using a predetermined data table, wherein the predetermined data table contains a corresponding relationship between the accelerator-pedal depth and the required outputted torque.

It should be noted that the technical means and the technical effects that are not described in detail in the apparatus may be referred to the corresponding technical means and technical effects in the method of the present invention, and it should be deemed that, after the description here, the apparatus has already clearly set forth the contents that are not described in detail.

The present invention provides a vehicle including an electronic device, the electronic device includes a memory, a processor, and a computer program that is stored in the memory and executable in the processor, the processor, when executing the computer program, implements the steps of any one of the above embodiments of the vehicle controlling method, for example, the step 201 to the step 204 shown in FIG. 2.

The present invention may further be implemented by a computer program product, the computer program product has a program code, and the program code, when executed in a corresponding processor, controller, computing device or terminal, implements the steps of any one of the above embodiments of the vehicle controlling method, for example, the step 201 to the step 204 shown in FIG. 2.

A person skilled in the art should understand that the method and the device according to the present invention may be implemented in various forms of hardware, software, firmware, dedicated processors or a combination thereof. The dedicated processors may include an application specific integrated circuit (ASIC), a reduced instruction-set computer (RISC) and/or a field-programmable gate array (FPGA). The proposed method and device are preferably implemented as a combination of hardware and software. The software is preferably installed in a program storage device as an application program. It is typically a machine based on a computer platform having hardware, for example, one or more central processing units (CPU), a random access memory (RAM) and one or more inputting/outputting (I/O) interfaces. The operating system is typically also installed in the computer platform. The processes and the functions described herein may be a part of the application program, or a part of the application program may be performed by the operating system.

FIG. 4 is a schematic diagram of the electronic device of the vehicle according to the present invention. As shown in FIG. 4, the electronic device 400 includes a processor 401, a memory 402, and a computer program 403 that is stored in the memory 402 and executable in the processor 401. The processor 401, when executing the computer program 403, implements the steps of the vehicle controlling method, for example, the step 201 to the step 204 shown in FIG. 2. Alternatively, the processor 401, when executing the computer program 403, implements the functions of the modules according to the above apparatus, for example, the functions of the module 301 to thee module 304 shown in FIG. 3.

As an example, the computer program 403 may be divided into one or more modules, and the one or more modules are stored in the memory 402, and are executed by the processor 401. The one or more modules may be a series of computer program instruction segments that can complete specific functions, and the instruction segments are used to describe the process of the execution of the computer program 403 in the electronic device 400. For example, the computer program 403 may be divided into the module 301 to the module 304 shown in FIG. 3.

The electronic device 400 may be a computing device such as a vehicle controller, a mobile phone, a notebook computer, a palmtop and a cloud server. The electronic device 400 may include, without limitation, a processor 401 and a memory 402. A person skilled in the art can understand that FIG. 4 is merely an example of the electronic device 400, and does not limit the electronic device 400, and the electronic device 400 may include more or fewer components than those shown in the figure, or a combination of some of the components, or different components. For example, the electronic device 400 may further include an inputting-outputting device, a network accessing device, a bus and so on.

The processors 401 may be a central processing unit (CPU), and may also be another generic processor, digital signal processor (DSP), application specific integrated circuit (ASIC), field-programmable gate array (FPGA) or another programmable logic device, discrete gate or transistor logic device, discrete hardware assembly and so on. The generic processor may be a microprocessor, and the processor may also be any conventional processor.

The memory 402 may be an internal storage unit of the electronic device 400, for example, a hard disk or an internal memory of the electronic device 400. The memory 402 may also be an external storage device of the electronic device 400, for example, a plug-connected hard disk, a smart media card (SMC), a secure digital (SD) card, a flash card, and so on, that the electronic device 400 is equipped with. Further, the memory 402 may also include not only the internal storage unit of the electronic device 400 but also the external storage device. The memory 402 is configured to store the computer program, and other programs and data that are required by the electronic device. The memory 402 may also be configured to temporarily store the data that have already been outputted or will be outputted.

A person skilled in the art can clearly understand that, in order for convenience and brevity of the description, the division of the above functional units and modules is merely taken as an example for the description. In practical applications, the above functions may be allocated to be completed by different functional units and modules according to demands, i.e., dividing the internal structure of the apparatus into different functional units or modules, to complete all or some of the functions described above. The functional units and modules may be integrated into one processing unit, or the units may also separately physically exist, or two or more of the units may also be integrated into one unit. The above-described integrated unit may be implemented in the form of hardware, and may also be implemented in the form of a software function unit. In addition, the particular names of the functional units and modules are merely for the convenience of distinguishing from each other, and are not intended to limit the protection scope of the present invention as defined in the claims.

A person skilled in the art can envisage that the units and the algorithm steps of the examples described herein may be implemented by using electronic hardware or a combination of computer software and electronic hardware. Whether those functions are executed by hardware or software depends on the particular applications and the design constraints of the technical solutions. A person skilled in the art may employ different methods to implement the described functions with respect to each of the particular applications, but the implementations should not be considered as extending beyond the scope of the present invention as defined in the claims.

## Claims

1. A vehicle controlling method, comprising:
(201) in response to a launching power build-up instruction, namely when the opening degree of the brake pedal is greater than or equal to a first opening-degree threshold, and the opening degree of the accelerator pedal is greater than or equal to a second opening-degree threshold, determining a required outputted torque of a vehicle;
(202) controlling an outputted torque of a driving electric motor to be a second outputted torque;
(203) controlling an outputted torque of an engine to be a first outputted torque, with a sum of the second outputted torque and the first outputted torque to be the required outputted torque;
**characterized by**
(203) controlling an outputted torque of an electric generator to be a third outputted torque, wherein the third outputted torque and the first outputted torque are balanced with each other, so that an outputted torque at a crankshaft end of the engine is zero; and
(204) in response to detecting an opening degree of a brake pedal being less than a third opening-degree threshold as a starting instruction, controlling the third outputted torque of the electric generator to exit in a predetermined mode comprising controlling the third outputted torque of the electric generator to exit in a gradient decreasing mode, and based on the second outputted torque and the outputted torque of the crankshaft end of the engine, driving the vehicle to start.

2. The vehicle controlling method according to claim 1, wherein a triggering condition of the launching power build-up instruction is:
when an opening degree of a brake pedal is greater than or equal to a first opening-degree threshold, and an opening degree of an accelerator pedal is greater than or equal to a second opening-degree threshold, generating the launching power build-up instruction.

3. The vehicle controlling method according to claim 1, wherein after the step of (201) in response to the launching power build-up instruction, the method further comprises:
detecting whether a vehicle state satisfies a predetermined condition, wherein the vehicle state comprises a battery state of charge, SOC, a battery-pack temperature, a battery-pack discharging power, a driving-electric-motor temperature, an electronic stability program, ESP, state and a safety-belt state; and
when the battery SOC is greater than an SOC threshold, the battery-pack temperature is in a first predetermined range, the battery-pack discharging power is greater than a power threshold, the driving-electric-motor temperature is in a second predetermined range, the ESP state is off and the safety-belt state is fastened-tightly, executing the step of determining the required outputted torque of the vehicle.

4. The vehicle controlling method according to claim 1, wherein the step of (203) controlling an outputted torque of the engine to be the first outputted torque, and controlling an outputted torque of the electric generator to be the third outputted torque comprises:
controlling a rotational speed of the engine to be a preset rotational speed;
sending a torque intervening instruction to the engine and the electric generator, and controlling a state of a clutch to be a slipping state; and
in response to the torque intervening instruction, synchronously increasing the outputted torque of the engine and the outputted torque of the electric generator, so that the outputted torque of the engine reaches the first outputted torque, and the outputted torque of the electric generator reaches the third outputted torque.

5. The vehicle controlling method according to claim 1, wherein the method further comprises:
calculating a total available torque of the vehicle, wherein the total available torque is determined based on a first available torque of the engine and a second available torque of the driving electric motor, and the second available torque is determined based on a discharging power and a rotational speed of the driving electric motor, wherein the second outputted torque is less than or equal to the second available torque, and the first outputted torque is less than or equal to the first available torque.

6. The vehicle controlling method according to claim 5, wherein the method further comprises:
when the total available torque is greater than or equal to the required outputted torque, determining the first outputted torque based on a difference between the required outputted torque and the second outputted torque; and when the total available torque is less than the required outputted torque, determining the first outputted torque based on a difference between the total available torque and the second outputted torque.

7. The vehicle controlling method according to claim 5, wherein a calculation formula of the second available torque is: Tq*ₘₒₜₒᵣ=*a·P/n, wherein Tq*ₘₒₜₒᵣ* represents the second available torque, a represents a predetermined coefficient, P represents a discharging power of the driving electric motor, and n represents a rotational speed of the driving electric motor.

8. The vehicle controlling method according to claim 7, wherein the method further comprises:
when the second available torque is less than or equal to a maximum torque of the driving electric motor, determining the total available torque according to a sum of the second available torque and the first available torque; and when the second available torque is greater than the maximum torque of the driving electric motor, determining the total available torque according to a sum of the maximum torque of the driving electric motor and the first available torque.

9. The vehicle controlling method according to any one of claims 1 to 8, wherein the step of determining the required outputted torque of the vehicle comprises:
determining the required outputted torque corresponding to an accelerator-pedal depth by using a predetermined data table, wherein the predetermined data table contains a corresponding relationship between the accelerator-pedal depth and the required outputted torque.

10. A vehicle, comprising an electronic device (400), the electronic device (400) comprising a memory (402), a processor (401) and a computer program (403) that is stored in the memory (402) and executable in the processor (401), wherein the processor (401), when executing the computer program, implements the steps of the vehicle controlling method according to any one of claims 1 to 9.

11. A non-transitory computer-readable storage medium, the computer-readable storage medium storing a computer program (403), wherein the computer program (403), when executed by a processor (401), implements the steps of the vehicle controlling method according to any one of claims 1 to 9.

## Patentansprüche

1. Fahrzeugsteuerungsverfahren, aufweisend:
(201) als Reaktion auf eine Anfahrleistungsaufbauanweisung, nämlich wenn der Öffnungsgrad des Bremspedals größer als oder gleich einem ersten Öffnungsgradschwellenwert ist und der Öffnungsgrad des Fahrpedals größer als oder gleich einem zweiten Öffnungsgradschwellenwert ist, Bestimmen eines erforderlichen Ausgangsdrehmoments eines Fahrzeugs;
(202) Steuern eines Ausgangsdrehmoments eines Antriebselektromotors auf ein zweites Ausgangsdrehmoment;
(203) Steuern eines Ausgangsdrehmoments eines Motors auf ein erstes Ausgangsdrehmoment, mit einer Summe des zweiten Ausgangsdrehmoments und des ersten Ausgangsdrehmoments als dem erforderlichen Ausgangsdrehmoment;
**gekennzeichnet durch**
(203) Steuern eines Ausgangsdrehmoments eines Elektrogenerators auf ein drittes Ausgangsdrehmoment, wobei das dritte Ausgangsdrehmoment und das erste Ausgangsdrehmoment miteinander ausgeglichen sind, sodass ein Ausgangsdrehmoment an einem Kurbelwellenende des Motors null ist; und
(204) als Reaktion auf ein Erfassen eines Öffnungsgrades eines Bremspedals, der kleiner als ein dritter Öffnungsgradschwellenwert ist, als eine Startanweisung, Steuern des dritten Ausgangsdrehmoments des Elektrogenerators derart, dass es in einem vorbestimmten Modus zurückgenommen wird, der ein Steuern des dritten Ausgangsdrehmoments des Elektrogenerators derart, dass es in einem Gradientenabnahmemodus zurückgenommen wird, aufweist, und, basierend auf dem zweiten Ausgangsdrehmoment und dem Ausgangsdrehmoment des Kurbelwellenendes des Motors, Antreiben des Fahrzeugs zum Starten.

2. Fahrzeugsteuerungsverfahren nach Anspruch 1, wobei eine Auslösebedingung der Anfahrleistungsaufbauanweisung ist:
wenn ein Öffnungsgrad eines Bremspedals größer als oder gleich einem ersten Öffnungsgradschwellenwert ist und ein Öffnungsgrad eines Fahrpedals größer als oder gleich einem zweiten Öffnungsgradschwellenwert ist, Erzeugen der Anfahrleistungsaufbauanweisung.

3. Fahrzeugsteuerungsverfahren nach Anspruch 1, wobei nach dem Schritt des (201) als Reaktion auf die Anfahrleistungsaufbauanweisung das Verfahren ferner aufweist:
Erfassen, ob ein Fahrzeugzustand eine vorbestimmte Bedingung erfüllt, wobei der Fahrzeugzustand einen Batterieladezustand, SOC, eine Batteriepacktemperatur, eine Batteriepackentladeleistung, eine Antriebselektromotortemperatur, einen Zustand eines elektronischen Stabilitätsprogramms, ESP, und einen Sicherheitsgurtzustand aufweist; und
wenn der Batterie-SOC größer als ein SOC-Schwellenwert ist, die Batteriepacktemperatur in einem ersten vorbestimmten Bereich liegt, die Batteriepackentladeleistung größer als ein Leistungsschwellenwert ist, die Antriebselektromotortemperatur in einem zweiten vorbestimmten Bereich liegt, der ESP-Zustand ausgeschaltet ist und der Sicherheitsgurtzustand festgeschnallt ist, Ausführen des Schritts des Bestimmens des erforderlichen Ausgangsdrehmoments des Fahrzeugs.

4. Fahrzeugsteuerungsverfahren nach Anspruch 1, wobei der Schritt des (203) Steuerns eines Ausgangsdrehmoments des Motors auf das erste Ausgangsdrehmoment und des Steuerns eines Ausgangsdrehmoments des Elektrogenerators auf das dritte Ausgangsdrehmoment aufweist:
Steuern einer Drehzahl des Motors auf eine voreingestellte Drehzahl;
Senden einer Drehmomenteingriffsanweisung an den Motor und den Elektrogenerator und Steuern eines Zustands einer Kupplung auf einen Schlupfzustand; und
als Reaktion auf die Drehmomenteingriffsanweisung synchrones Erhöhen des Ausgangsdrehmoments des Motors und des Ausgangsdrehmoments des Elektrogenerators, sodass das Ausgangsdrehmoment des Motors das erste Ausgangsdrehmoment erreicht und das Ausgangsdrehmoment des Elektrogenerators das dritte Ausgangsdrehmoment erreicht.

5. Fahrzeugsteuerungsverfahren nach Anspruch 1, wobei das Verfahren ferner aufweist:
Berechnen eines gesamten verfügbaren Drehmoments des Fahrzeugs, wobei das gesamte verfügbare Drehmoment basierend auf einem ersten verfügbaren Drehmoment des Motors und einem zweiten verfügbaren Drehmoment des Antriebselektromotors bestimmt wird und das zweite verfügbare Drehmoment basierend auf einer Entladeleistung und einer Drehzahl des Antriebselektromotors bestimmt wird, wobei das zweite Ausgangsdrehmoment kleiner als oder gleich dem zweiten verfügbaren Drehmoment ist und das erste Ausgangsdrehmoment kleiner als oder gleich dem ersten verfügbaren Drehmoment ist.

6. Fahrzeugsteuerungsverfahren nach Anspruch 5, wobei das Verfahren ferner aufweist:
wenn das gesamte verfügbare Drehmoment größer als oder gleich dem erforderlichen Ausgangsdrehmoment ist, Bestimmen des ersten Ausgangsdrehmoments basierend auf einer Differenz zwischen dem erforderlichen Ausgangsdrehmoment und dem zweiten Ausgangsdrehmoment; und wenn das gesamte verfügbare Drehmoment kleiner als das erforderliche Ausgangsdrehmoment ist, Bestimmen des ersten Ausgangsdrehmoments basierend auf einer Differenz zwischen dem gesamten verfügbaren Drehmoment und dem zweiten Ausgangsdrehmoment.

7. Fahrzeugsteuerungsverfahren nach Anspruch 5, wobei eine Berechnungsformel des zweiten verfügbaren Drehmoments lautet: Tqₘₒₜₒᵣ=a·P/n, wobei Tqₘₒₜₒᵣ das zweite verfügbare Drehmoment darstellt, a einen vorbestimmten Koeffizienten darstellt, P eine Entladeleistung des Antriebselektromotors darstellt und n eine Drehzahl des Antriebselektromotors darstellt.

8. Fahrzeugsteuerungsverfahren nach Anspruch 7, wobei das Verfahren ferner aufweist:
wenn das zweite verfügbare Drehmoment kleiner als oder gleich einem maximalen Drehmoment des Antriebselektromotors ist, Bestimmen des gesamten verfügbaren Drehmoments gemäß einer Summe des zweiten verfügbaren Drehmoments und des ersten verfügbaren Drehmoments; und wenn das zweite verfügbare Drehmoment größer als das maximale Drehmoment des Antriebselektromotors ist, Bestimmen des gesamten verfügbaren Drehmoments gemäß einer Summe des maximalen Drehmoments des Antriebselektromotors und des ersten verfügbaren Drehmoments.

9. Fahrzeugsteuerungsverfahren nach einem der Ansprüche 1 bis 8, wobei der Schritt des Bestimmens des erforderlichen Ausgangsdrehmoments des Fahrzeugs aufweist:
Bestimmen des einer Fahrpedaltiefe entsprechenden erforderlichen Ausgangsdrehmoments unter Verwendung einer vorbestimmten Datentabelle, wobei die vorbestimmte Datentabelle eine Entsprechungsbeziehung zwischen der Fahrpedaltiefe und dem erforderlichen Ausgangsdrehmoment enthält.

10. Fahrzeug, aufweisend eine elektronische Vorrichtung (400), wobei die elektronische Vorrichtung (400) einen Speicher (402), einen Prozessor (401) und ein Computerprogramm (403) aufweist, das in dem Speicher (402) gespeichert und in dem Prozessor (401) ausführbar ist, wobei der Prozessor (401) bei Ausführung des Computerprogramms die Schritte des Fahrzeugsteuerungsverfahrens nach einem der Ansprüche 1 bis 9 implementiert.

11. Nichtflüchtiges computerlesbares Speichermedium, wobei das computerlesbare Speichermedium ein Computerprogramm (403) speichert, wobei das Computerprogramm (403) bei Ausführung durch einen Prozessor (401) die Schritte des Fahrzeugsteuerungsverfahrens nach einem der Ansprüche 1 bis 9 implementiert.

## Revendications

1. Procédé de commande de véhicule, comprenant :
(201) en réponse à une instruction de montée en puissance de lancement, à savoir lorsque le degré d'ouverture de la pédale de frein est supérieur ou égal à un premier seuil de degré d'ouverture et que le degré d'ouverture de la pédale d'accélérateur est supérieur ou égal à un deuxième seuil de degré d'ouverture, la détermination d'un couple de sortie requis d'un véhicule ;
(202) la commande d'un couple de sortie d'un moteur électrique d'entraînement de manière à ce qu'il soit égal à un deuxième couple de sortie ; et
(203) la commande d'un couple de sortie d'un moteur thermique de manière à ce qu'il soit égal à un premier couple de sortie, une somme du deuxième couple de sortie et du premier couple de sortie étant égale au couple de sortie requis ;
**caractérisé par** :
(203) la commande d'un couple de sortie d'un générateur électrique de manière à ce qu'il soit égal à un troisième couple de sortie, dans lequel le troisième couple de sortie et le premier couple de sortie sont équilibrés l'un par rapport à l'autre de telle sorte qu'un couple de sortie au niveau d'une extrémité de vilebrequin du moteur thermique soit nul ; et
(204) en réponse à la détection du fait que le degré d'ouverture de la pédale de frein est inférieur à un troisième seuil de degré d'ouverture en tant qu'instruction de démarrage, la commande du troisième couple de sortie du générateur électrique de manière à ce qu'il sorte selon un mode prédéterminé comprenant la commande du troisième couple de sortie du générateur électrique de manière à ce qu'il sorte selon un mode de diminution progressive et, sur la base du deuxième couple de sortie et du couple de sortie au niveau de l'extrémité de vilebrequin du moteur thermique, l'entraînement du véhicule pour son démarrage.

2. Procédé de commande de véhicule selon la revendication 1, dans lequel une condition de déclenchement de l'instruction de montée en puissance de lancement est la suivante :
lorsque le degré d'ouverture de la pédale de frein est supérieur ou égal au premier seuil de degré d'ouverture et que le degré d'ouverture de la pédale d'accélérateur est supérieur ou égal au deuxième seuil de degré d'ouverture, la génération de l'instruction de montée en puissance de lancement.

3. Procédé de commande de véhicule selon la revendication 1, dans lequel, après l'étape (201) en réponse à l'instruction de montée en puissance de lancement, le procédé comprend en outre :
la détection de si un état du véhicule satisfait ou non une condition prédéterminée, dans lequel l'état du véhicule comprend un état de charge, SOC, d'une batterie, une température d'un bloc-batterie, une puissance de décharge du bloc-batterie, une température du moteur électrique d'entraînement, un état d'un programme électronique de stabilité, ESP, et un état de la ceinture de sécurité ; et
lorsque le SOC de la batterie est supérieur à un seuil de SOC, que la température du bloc-batterie est comprise dans une première plage prédéterminée, que la puissance de décharge du bloc-batterie est supérieure à un seuil de puissance, que la température du moteur électrique d'entraînement est comprise dans une deuxième plage prédéterminée, que l'état de l'ESP est un état de désactivation et que l'état de la ceinture de sécurité indique que celle-ci est correctement attachée, l'exécution de l'étape de détermination du couple de sortie requis du véhicule.

4. Procédé de commande de véhicule selon la revendication 1, dans lequel l'étape (203) de commande du couple de sortie du moteur thermique de manière à ce qu'il soit égal au premier couple de sortie ainsi que de commande du couple de sortie du générateur électrique de manière à ce qu'il soit égal au troisième couple de sortie comprend :
la commande d'une vitesse de rotation du moteur thermique de manière à ce qu'elle soit égale à une vitesse de rotation prédéfinie ;
l'envoi d'une instruction d'intervention sur le couple au moteur thermique et au générateur électrique et la commande d'un état d'un embrayage de manière à ce qu'il soit un état de patinage ; et
en réponse à l'instruction d'intervention sur le couple, l'augmentation de manière synchrone du couple de sortie du moteur thermique et du couple de sortie du générateur électrique de telle sorte que le couple de sortie du moteur thermique atteigne le premier couple de sortie et que le couple de sortie du générateur électrique atteigne le troisième couple de sortie.

5. Procédé de commande de véhicule selon la revendication 1, dans lequel le procédé comprend en outre :
le calcul d'un couple disponible total du véhicule, dans lequel le couple disponible total est déterminé sur la base d'un premier couple disponible du moteur thermique et d'un deuxième couple disponible du moteur électrique d'entraînement, et le deuxième couple disponible est déterminé sur la base d'une puissance de décharge et d'une vitesse de rotation du moteur électrique d'entraînement, et dans lequel le deuxième couple de sortie est inférieur ou égal au deuxième couple disponible et le premier couple de sortie est inférieur ou égal au premier couple disponible.

6. Procédé de commande de véhicule selon la revendication 5, dans lequel le procédé comprend en outre :
lorsque le couple disponible total est supérieur ou égal au couple de sortie requis, la détermination du premier couple de sortie sur la base d'une différence entre le couple de sortie requis et le deuxième couple de sortie ; et
lorsque le couple disponible total est inférieur au couple de sortie requis, la détermination du premier couple de sortie sur la base d'une différence entre le couple disponible total et le deuxième couple de sortie.

7. Procédé de commande de véhicule selon la revendication 5, dans lequel une formule de calcul du deuxième couple disponible est :${Tq}_{motor} = a ⋅ P / n ,$ formule dans laquelle Tqₘₒₜₒᵣ représente le deuxième couple disponible, a représente un coefficient prédéterminé, P représente une puissance de décharge du moteur électrique d'entraînement et n représente la vitesse de rotation du moteur électrique d'entraînement.

8. Procédé de commande de véhicule selon la revendication 7, dans lequel le procédé comprend en outre :
lorsque le deuxième couple disponible est inférieur ou égal à un couple maximum du moteur électrique d'entraînement, la détermination du couple disponible total conformément à une somme du deuxième couple disponible et du premier couple disponible ; et lorsque le deuxième couple disponible est supérieur au couple maximum du moteur électrique d'entraînement, la détermination du couple disponible total conformément à une somme du couple maximum du moteur électrique d'entraînement et du premier couple disponible.

9. Procédé de commande de véhicule selon l'une quelconque des revendications 1 à 8, dans lequel l'étape de détermination du couple de sortie requis du véhicule comprend :
la détermination du couple de sortie requis qui correspond à une profondeur d'enfoncement de la pédale d'accélérateur au moyen d'une table de données prédéterminée, dans lequel la table de données prédéterminée contient une relation de correspondance entre la profondeur d'enfoncement de la pédale d'accélérateur et le couple de sortie requis.

10. Véhicule, comprenant un dispositif électronique (400), le dispositif électronique (400) comprenant une mémoire (402), un processeur (401) et un programme informatique (403) qui est stocké dans la mémoire (402) et qui peut être exécuté dans le processeur (401), dans lequel le processeur (401), lors de l'exécution du programme informatique, met en œuvre les étapes du procédé de commande de véhicule selon l'une quelconque des revendications 1 à 9.

11. Support de stockage lisible par ordinateur non transitoire, le support de stockage lisible par ordinateur stockant un programme informatique (403), dans lequel le programme informatique (403), lorsqu'il est exécuté par un processeur (401), met en œuvre les étapes du procédé de commande de véhicule selon l'une quelconque des revendications 1 à 9.
